# EUROPÄISCHE PATENTSCHRIFT

(11) **EP 2 890 519 B1**
(45) Veröffentlichungstag und Bekanntmachung des Hinweises auf die Patenterteilung: **31.01.2018**
(21) Anmeldenummer: 13776949.3
(22) Anmeldetag: 31.07.2013
(51) Int. Cl.: B23P 11/00, B21D 53/84, F01L 1/047, F16H 53/02, B21K 25/00, F16D 1/072, B22F 3/10, B22F 7/08, C21D 9/00, C21D 1/18, C21D 1/26, C22C 21/00, C22F 1/00, C22C 38/00, C22C 9/02, B22F 3/24, B22F 7/06, B22F 5/08, B22F 7/00, C22F 1/08, F01L 1/344

(54) **VERFAHREN ZUR HERSTELLUNG EINES VERBUNDBAUTEILS**
METHOD FOR PRODUCING A COMPOSITE COMPONENT
PROCÉDÉ DE FABRICATION D'UN ÉLÉMENT COMPOSITE

(30) Priorität: 29.08.2012 DE 102012017040
(43) Veröffentlichungstag der Anmeldung: 08.07.2015
(73) Patentinhaber: GKN Sinter Metals Engineering GmbH, 42477 Radevormwald (DE)
(72) Erfinder: KRUZHANOV, Vladislav, 42897 Remscheid (DE); ARNHOLD, Volker, 42369 Wuppertal (DE)
(74) Vertreter: KNH Patentanwälte
(86) Internationale Anmeldenummer: PCT/EP2013/002263
(87) Internationale Veröffentlichungsnummer: WO 2014/032756

(56) Entgegenhaltungen:
- EP-A1- 2 000 230
- WO-A1-2011/035858
- US-A- 3 962 772
- US-A- 4 059 214
- US-A1- 2008 276 753
- US-A1- 2010 224 146

## Beschreibung

Die Erfindung betrifft ein Verfahren zur Herstellung eines Verbundbauteils. Es ist bekannt, Bauteile miteinander zu fügen. Eine Methode des Fügens sieht vor, dass eine Verbindung mittels einer Feder erfolgt. Hierfür ist jedoch eine bestimmte mechanische Bearbeitung vorgesehen, welche zusätzlichen Aufwand erfordert. Die Fertigungstechnik klassifiziert das Fügen hierbei in verschiedenen Gruppen, in die unterschiedliche Fügeverfahren eingeordnet werden. Eine diese Gruppen sieht das An- und Einpressen von Bauteilen vor. Hierbei kann über ein entsprechendes Passungsübermaß eines ersten Bauteils gegenüber einer Ausnehmung eines zweiten Bauteils bewirkt werden, dass eine Pressverbindung zwischen diesem ersten und dem zweiten Bauteil bewirkt wird. Ein Nachteil eines solchen Fügens mittels einer Methode des An- und Einpressens von Bauteilen ist allerdings, dass viele dieser Verfahren bei pulvermetallurgisch hergestellten Bauteilen nur begrenzt verwendbar sind. Grund hierfür ist die inhärente Porosität pulvermetallurgischer Bauteile, die hierdurch bei den bei einem An- und Einpressen oft enormen wirkenden Drücken einer Beschädigungsgefahr ausgeliefert sind. Dies ist umso problematischer, je geringer die Bruchdehnung der pulvermetallurgisch hergestellten Bauteile ist. Technologisch wird das An- und Einpressen besonders häufig für ein Fügen von Rotoren mit Wellen genutzt, wobei bei einem Fügen von pulvermetallurgisch hergestellten Rotoren gerade die oben beschriebenen Problematiken zum Tragen kommen.

Aus US-A-2008/276753 ist ein Verfahren zur Herstellung eines Verbundbauteils bekannt, wobei eine Welle und ein als Nocken ausgebildetes Sinterbauteil mit einem Außenumfang als Verbundbauteil gefügt werden.

Der Erfindung liegt die Aufgabe zu Grunde, ein Fügen zu erleichtern und hierdurch eine Herstellung von Verbundbauteilen mit einer höheren Qualität zu ermöglichen.

Die Aufgabe wird mit einem Verfahren nach Anspruch 1 gelöst. Vorteilhafte Ausgestaltungen des Verfahrens sind in den Unteransprüchen angegeben. Der Begriff des Verbundbauteils umfasst hierbei insbesondere Bauteile, welche aus wenigstens zwei Bauteilen zusammengesetzt sind, wobei wenigstens zwei der Bauteile lösbar oder unlösbar miteinander verbunden sind. Es kann jedoch ebenfalls vorgesehen sein, dass mehr als zwei Bauteile miteinander verbunden sind. So kann beispielsweise vorgesehen sein, dass es sich bei dem Verbundbauteil um eine Nockenwelle, eine Zahnradwelle oder eine Stirnradwelle handelt.
Der Begriff der Welle umfasst in der genutzten Verwendung entsprechend dem üblichen Sprachgebrauch ein Maschinenelement, welches zum Weiterleiten von Drehbewegungen und/oder Drehmomenten und/oder zur Lagerung rotierender Teile vorgesehen ist. In einer einfachsten Form kann es sich hierbei um ein zylindrischen Stab, beispielsweise mit kreisrunden Querschnitt handeln. Es kann allerdings ebenso vorgesehen sein, dass der Begriff der Welle auch solche Wellen umfasst, die einen anderen als einen kreisrunden Querschnitt aufweisen. So können beispielsweise Wellen mit einem rechteckigen, quadratischen, elliptischem, dreieckigen oder vieleckigen Querschnitt vorgesehen sein. Auch Wellen mit einem sonstigen, nicht einer regelmäßigen geometrischen Figur entsprechenden Querschnitt können vorgesehen sein. Des Weiteren sollen bei dem Begriff der Welle in der verwendeten Bedeutung auch Wellen umfasst sein, welche von der Form eines Stabs abweichen oder wenigstens bereichsweise abweichen. So kann vorgesehen sein, dass Wellen mit einer anderen als einer zylindrischen Querschnittsfläche von dem Begriff der Welle umfasst sind. Ebenfalls soll eine im Querschnitt sich ändernde oder mit in der Form sich änderndem Querschnitt versehene Welle vorgesehen sein können. Ebenso sollen Ausgestaltungen möglich sein, deren vorgesehene Rotationsachse und/oder Schwerpunktsachse, beispielsweise ausgebildet als eine einen geometrischen Schwerpunkt eines Querschnitts der Welle durchlaufende Achse, nicht symmetrisch ist. Ebenso können beispielsweise auch gegenüber der Achsenrichtung sowie gegenüber der Achsenrichtung parallelen Richtungen ein oder mehrfach abgewinkelte Wellen vorgesehen sein, die oft auch als gekröpfte Wellen bezeichnet werden. Neben in rechten Winkeln abgewinkelten Bereichen der Welle können auch in anderen als dem rechten Winkel abgewinkelte Bereiche vorgesehen sein.

Des Weiteren ist bei der Verwendung des Begriffs der Welle in der hier verwendeten Nutzung noch vorgesehen, dass auch wenigstens bereichsweise längliche Bauteile von dem Begriff der Welle umfasst werden, welche nicht für eine Übertragung von Drehbewegungen und/oder Drehmomenten vorgesehen sind, sondern ausschließlich für eine Lagerung und/oder ein Tragen drehbarer Bauteile. So ist beispielsweise auch vorgesehen, dass die im Folgenden beschriebenen Verfahren auch ein Fügen von Achsen umfassen, dass also der Begriff der Welle in einem weiteren Sinne auch Achsen umfasst.

Bevorzugt ist das Sinterteil als Rotor oder Nocken ausgebildet.

Der Begriff des Rotors umfasst in der verwendeten Nutzung sämtliche zur Rotation um die Welle beziehungsweise mit der Welle vorgesehenen Maschinenelemente sowie sonstigen Bauteile. Die Rotation kann hierbei als Rotation um eine beliebige Achse erfolgen, das heißt es muss nicht notwendigerweise eine Rotationsachse des Rotors mit einer Rotationsachse der Welle deckungsgleich sein. Ebenfalls kann vorgesehen sein, dass eine Rotationsachse des Rotors und/oder eine Rotationsachse der Welle nicht mit einer Symmetrieachse des Rotors deckungsgleich sind. Mit dem Begriff des Rotors können beispielsweise Zahnräder, Ellipsenräder, Schnecken, Stirnräder sowie neben vielen anderen auch insbesondere auch die explizit beanspruchten Nocken umfasst sein.

Der Begriff des Sinterteils umfasst mittels Urformverfahren, und hierbei insbesondere pulvermetallurgischer Verfahrens, hergestellte Bauteile. Der Begriff des Sinterteils umfasst ein gesintertes Bauteil oder ein gesintertes Bauteil, welches nach dem Sintern noch weiterbehandelt wurde, beispielsweise durch eine zusätzliche Wärmebehandlung. Der Begriff der Wärmebehandlung umfasst hierbei wenigstens eine gezielte Erwärmung und/oder ein Abschrecken des Bauteils. Die gezielte Erwärmung kann hierbei beispielsweise als Bestandteil des Bandprozesse bei einer Herstellung eines Sinterteils in einem Sinterbandofenprozess erfolgen, ebenso kann aber vorgesehen sein, dass ein separater Erwärmungsprozess durchgeführt wird.

Der Begriff des Außenumfangs wird insbesondere zur Benennung einer Mantelfläche des Sinterteils verwendet. Der Außenumfang kann beispielsweise teilweise oder vollständig parallel zu einer Achse des Sinterteils orientiert sein, aber auch eine anderweitige Orientierung kann vorgesehen sein, beispielsweise bei einer konischen Form des Sinterteils.

Der Begriff der Bohrung wird zur Benennung einer Ausnehmung verwendet. Der Begriff der durchgehenden Bohrung bezeichnet eine Ausnehmung, welche ein Bauteil von einer ersten Oberfläche zu einer zweiten Oberfläche durchdringt. Der Begriff der Bohrung erfordert hierbei nicht, dass es sich um eine tatsächlich mittels eines Bohrens erzeugte Ausnehmung handeln muss. Da mittels der beschriebenen Verfahren insbesondere ein Fügen von mittels Urformverfahren und insbesondere mittels pulvermetallurgischer Verfahren wie speziell einem Sinterverfahren hergestellter Bauteile vorgesehen ist, wird in vielen Fällen die Bohrung bereits während dieses Urformverfahrens ausgebildet sein. Neben einer Ausbildung der Bohrung mittels eines Urformverfahrens können aber auch weitere Verfahren für eine Ausbildung einer Bohrung vorgesehen sein. Der Begriff der Bohrung beinhaltet des Weiteren nicht, dass eine spezifische Querschnittsfläche vorliegen muss. Insbesondere ist es im Gegensatz zu dem häufig üblichen umgangssprachlichen Gebrauch des Begriffs nicht erforderlich, dass es sich bei der Bohrung um eine durchgehende Ausnehmung mit einer kreisrunden Querschnittsfläche handelt. Vielmehr kann ebenfalls vorgesehen sein, dass die Bohrung beispielsweise quadratische, rechteckige, mehr- oder vieleckige oder auch unregelmäßige Querschnittsflächen aufweist. Ebenso kann neben einer zylindrischen Ausgestaltung der Bohrung auch ein von der zylindrischen Ausgestaltung abweichender Verlauf der Bohrung vorgesehen sein. So kann beispielsweise vorgesehen sein, dass die Bohrung an unterschiedlichen Positionen der Achse unterschiedliche Querschnittsformen aufweist. Des Weiteren kann vorgesehen sein, dass die Bohrung, beispielsweise abschnittsweise, einen konischen oder sonstigen einen Betrag der Querschnittsfläche verändernden Verlauf aufweist.

Die Begrifflichkeit des Einbringens der Welle in eine durchgehende Bohrung des Sinterteils ist hierbei dahingehend zu verstehen, dass sowohl ein Einbringen der Welle in die Bohrung mittels Bewegens nur der Welle, Mittels Bewegens nur des Sinterteils oder mittels gleichzeitigen und/oder abwechselnden Bewegens sowohl der Welle als auch des Sinterteils möglich sein soll.

In einer Ausbildung ist vorgesehen, dass ein vollständiges Einbringen der Welle in die durchgehende Bohrung erfolgt. Ein vollständiges Einbringen ist dann erfolgt, wenn die durchgehende Bohrung vollständig von der Welle ausgefüllt ist.

Ebenso kann vorgesehen sein, dass nur ein teilweises Einbringen der Welle in die durchgehende Bohrung erfolgt.

Beide Möglichkeiten, sowohl ein teilweises als auch ein vollständiges Einbringen der Welle in die Bohrung sollen durch die Begrifflichkeit des Einbringens der Welle in die Bohrung umfasst sein.

In einer bevorzugten Ausgestaltung des Verfahrens ist vorgesehen, dass das Kalibrieren bei gleichzeitiger axialer Druckausübung auf das Sinterteil mittels zumindest eines Oberstempels und zumindest eines Unterstempels erfolgt.

In einer Ausbildung des Verfahrens kann beispielsweise vorgesehen sein, dass die Welle zumindest teilweise in die Kalibriermatrize positioniert wird,
- hiernach das Einbringen der Welle in die durchgehende Bohrung mittels Führens des Sinterteils in die Kalibriermatrize bei in der Kalibriermatrize positionierter Welle erfolgt,
- wenigstens teilweise während und/oder teilweise nach dem Einbringen der Welle in die durchgehende Bohrung das Sinterteil in der Kalibriermatrize kalibriert und hierbei mit der Welle zu dem Verbundbauteil gefügt wird.

Die teilweise Positionierung der Welle in die Kalibriermatrize erfolgt bevorzugt durch ein radiales Positionieren der Welle mittels Anordnens der Welle an einem Unterstempel.

Der Begriff des radialen Positionierung umfasst hierbei, dass die Welle in eine senkrecht zur axialen Richtung weisende Richtung positioniert wird. Dies bewirkt, dass ein Einbringen der Welle in die durchgehende Bohrung des Sinterteils derart erfolgen kann, dass das Sinterteil mit der Bohrung die Welle umfassend über die Welle geschoben werden kann. Während des Führens des Sinterteils in einen Bereich der Welle kann hierbei ein Führen des Sinterteils in die Kalibriermatrize erfolgen. Das Führen des Sinterteils in die Kalibriermatrize umfasst hierbei, dass wenigstens ein axialer Bereich des Sinterteils in einem axialen Bereich der Kalibriermatrize befindlich ist. Während des Führens des Sinterteils in die Kalibriermatrize gelangt hierbei das Sinterteil bevorzugt zunächst in einen Bereich einer Einlaufschräge der Kalibriermatrize.

Bevorzugt wird bereits innerhalb des Bereichs der Einlaufschräge wenigstens teilweise ein Einbringen der Welle in die durchgehende Bohrung des Sinterteils durchgeführt.

In einer weiteren Ausbildung des Verfahrens erfolgt das Einbringen der Welle in die durchgehende Bohrung außerhalb der Kalibriermatrize. Hiernach wird das Sinterteil mit der in der Bohrung befindlichen Welle in die Kalibriermatrize positioniert. Das Sinterteil wird wenigstens teilweise während und/oder teilweise nach dem Einbringen der Welle in die durchgehende Bohrung in der Kalibriermatrize kalibriert und hierbei mit der Welle zu dem Verbundbauteil gefügt.

Ebenso kann vorgesehen sein, dass das Sinterteil zumindest teilweise in die Kalibriermatrize positioniert wird und hiernach die Welle in die durchgehende Bohrung eingebracht wird. Weiterhin ist vorgesehen, dass das Sinterteil wenigstens teilweise während und/oder teilweise nach dem Einbringen der Welle in die durchgehende Bohrung in der Kalibriermatrize kalibriert und hierbei mit der Welle zu dem Verbundbauteil gefügt wird.

In einer bevorzugten Ausbildung ist vorgesehen, dass das Sinterteil zumindest teilweise in einem Bereich einer Einlaufschräge in die Kalibriermatrize eingelegt wird.

In einer Ausgestaltung kann vorgesehen sein, dass vor dem Einbringen der Welle in die Bohrung bereits ein Kalibrieren des Sinterteils erfolgt. Hierbei kann vorgesehen sein, dass ein Kalibrieren des Sinterteils bis zu einem Zustand des Sinterteils erfolgt, in dem das Sinterteil noch nicht bis zum Erreichen seiner Endmaße gelangt ist.

In einer weiteren Ausgestaltung des Verfahrens ist vorgesehen, dass vor dem Einbringen der Welle in die Bohrung die Welle gegenüber der Bohrung kein Übermaß aufweist.

Ein Vorteil einer Ausgestaltung des Verfahrens derart, dass vor dem Einbringen der Welle in die Bohrung die Welle gegenüber der Bohrung kein Übermaß aufweist, ist beispielsweise dahingehend gegeben, dass ein einfaches Einbringen der Welle in die Bohrung ermöglicht ist. Beispielsweise kann in einem Fall, in welchem die Welle bereits in einem Unterstempel in einem Bereich der Kalibriermatrize positioniert ist, die Welle ohne zusätzliche Druckausübung oder unter nur geringer Druckausübung in einem Bereich der Kalibriermatrize, wie insbesondere in einem Bereich der Einlaufschräge, positioniert werden. Dadurch, dass kein Pressen zum anfänglichen Einbringen der Welle in die Matrize erforderlich ist, ergibt sich beispielsweise der Vorteil, dass das Fügen deutlich vereinfacht wird. Des Weiteren ergibt sich der Vorteil, dass die Gefahr einer Beschädigung eines der Bauteile wie insbesondere einer Beschädigung des Sinterteils durch Zugeigenspannungen deutlich reduziert ist und/oder dass aufgrund des nun nicht mehr notwendigen Pressens die Wirtschaftlichkeit des Verfahrens verbessert wird.

Als ein weiterer Vorteil ergibt sich durch die Möglichkeit des bereits vor dem Pressen erfolgenden Einbringens der Welle in die durchgehende Bohrung, dass die Welle für den nachfolgenden Pressprozess als Führung des Sinterteils fungiert.

In einer weiteren Ausbildung des Verfahrens kann hierbei vorgesehen sein, dass die Welle wenigstens bereichsweise einen zylindrischen Aufbau hat mit einem Querschnitt, welcher mit dem Querschnitt der Bohrung in Form und Maß übereinstimmt.

Maßgeblich ist für eine Ausbildung des Verfahrens mit einer Welle mit wenigstens bereichsweise einem zylindrischen Aufbau mit einem Querschnitt, welcher mit dem Querschnitt der Bohrung in Form und Maß übereinstimmt, der Zeitpunkt des Einbringens der Welle. So kann vorgesehen sein, dass vor einem ersten Kalibrieren des Sinterteils die Bohrung größere Abmessungen aufweist als die Welle. Es kann beispielsweise vorgesehen sein, dass das Einbringen der Welle in die Bohrung erst nach einem ersten Kalibrieren des Sinterteils erfolgt und nach dem Einbringen ein zweites Kalibrieren durchgeführt wird.

Insbesondere kann in einer Ausbildung vorgesehen sein, dass die Welle wenigstens bereichsweise kreiszylindrisch ausgebildet ist mit einem wenigstens bereichsweise gleichen Durchmesser wie dem Durchmesser des Querschnitts der Welle in dem wenigstens bereichsweise kreisrunden Bereich.

In einer anderen Weiterbildung kann beispielsweise vorgesehen sein, dass die Welle kreiszylindrisch ist und dass der Durchmesser der Welle geringer ist als der Durchmesser der Bohrung.

In einer weiteren Ausbildung des Verfahrens ist vorgesehen, dass nach dem Einbringen der Welle in die Bohrung des Sinterteils das Sinterteil mit in der Bohrung befindlicher Welle in die Kalibriermatrize eingepresst wird.

Hierbei kann vorgesehen sein, dass ein Einbringen der Welle in die Bohrung vollständig außerhalb der Kalibriermatrize erfolgt. Des Weiteren kann vorgesehen sein, dass ein Einbringen der Welle in die Bohrung des Sinterteils in einem Bereich einer Einlaufschräge der Kalibriermatrize erfolgt, dass das Einpressen also mit einem bereits in einem Bereich der Kalibriermatrize befindlichen Sinterteil beginnt.

Das Einbringen des Sinterteils mit in der Bohrung des Sinterteils befindlicher Welle in die Kalibriermatrize mittels Pressen bewirkt, dass während des Zeitraums des Pressens ein radialer Druck, welcher durch die Kalibriermatrize zum Kalibrieren auf den Außenumfang des Sinterteils ausgeübt wird, dazu führt, dass die Welle an der Kontaktfläche einer Innenfläche der Bohrung sowie des Mantels der Welle einen Gegendruck auf das Sinterteil ausübt. Die Welle fungiert somit als Kalibrierdorn. Es ist somit eine Nutzung der Welle als Kalibrierdorn wenigstens während eines Zeitraums der Kalibrierung des Sinterteils vorgesehen.

In einer weiteren Ausführung des Verfahrens ist vorgesehen, dass das Sinterteil axial in die Kalibriermatrize eingepresst wird.

In einer weiteren Ausbildung des Verfahrens ist beispielsweise vorgesehen, dass wenigstens teilweise während des Kalibrierens zusätzlich zu von der Kalibriermatrize aufgebrachtem konzentrischen Druck das Sinterteil bei auf eine Oberseite des Sinterteils und/oder auf eine Unterseite des Sinterteils einwirkendem Druck axial gepresst wird.

Beispielsweise kann vorgesehen sein, dass genau ein Unterstempel auf eine erste axiale Stirnseite des Sinterteils sowie genau ein Oberstempel auf eine zweite, parallel zur ersten axialen Stirnseite orientierte axiale Stirnseite des Sinterteils mittels Pressen Druck ausüben, während gleichzeitig radialer Druck durch die Kalibriermatrize auf das Sinterteil ausgeübt wird. Das Sinterteil und/oder die Welle sind hierbei folglich vollständig von der Kalibriermatrize und dem Oberstempel und dem Unterstempel umgeben, so dass ein allseitiger äußerer Druck auf alle oder auf weitgehend alle äußeren Oberflächen ausgeübt wird. Hierdurch wird bewirkt, dass das Auftreten von Zugeigenspannungen in dem Sinterteil weitgehend vermieden wird.

In einer weiteren Ausbildung des Verfahrens kann beispielsweise vorgesehen sein, dass durch das Kalibrieren des Sinterteils mit wenigstens zeitweise gleichzeitig während des Kalibrierens in der Bohrung des Sinterteils befindlicher Welle bewirkt wird, dass in demselben Arbeitsgang
- eine kraftschlüssige Verbindung zwischen dem Sinterteil und der Welle hergestellt wird und dass
- der Außenumfang des Sinterteils mittels Radialverdichtung kalibriert wird.

Ein Beitrag zu einer kraftschlüssigen Verbindung zwischen dem Sinterteil und der Welle kann hierbei beispielsweise dadurch bewirkt werden, dass in dem Sinterteil im Wesentlichen Druckeigenspannungen erzeugt werden, und diese Druckeigenspannungen hoch sind, um eine kraftschlüssige Verbindung zwischen der Welle und dem Sinterteil zu bewirken.

In einer anderen Ausführung des Verfahren kann beispielsweise vorgesehen sein, dass mittels durch das Kalibrieren des Sinterteils erzeugten Drucks, der auf das Sinterteil einwirkt, in Zusammenwirkung mit durch die in der Bohrung des Sinterteils befindlichen Welle erzeugtem Gegendruck innerhalb des Sinterteils im Wesentlichen Druckeigenspannungen erzeugt werden.

In dieser Ausgestaltung des Verfahrens ist bevorzugt vorgesehen, dass ein Kraftschluss zwischen dem Sinterteil und der Welle im Wesentlichen durch diese Druckeigenspannungen bewirkt wird.

Die Druckeigenspannungen werden hierbei insbesondere durch den während des Kalibrierens und gegebenenfalls gleichzeitigen oder zeitweise gleichzeitigen axialen Pressens auf eine, mehrere oder bevorzugt alle äußeren Oberflächen ausgeübten Druck in Zusammenwirkung mit dem durch die wenigstens zeitweise gleichzeitig während des Kalibrierens in der Bohrung des Sinterteils befindlichen Welle auf die Innenfläche der Bohrung ausgeübten Druck erzeugt. Durch die vielseitige oder bevorzugt allseitige Druckausübung ergibt sich der Vorteil, dass innerhalb des Sinterteils sich nahezu vollständig, das heißt überwiegend, Druckeigenspannungen bilden. Zu einer möglichen Rissbildung in den Sinterteilen führende Zugeigenspannungen hingegen werden weitgehend vermieden und/oder durch die Druckeigenspannungen überkompensiert. Hierdurch ergibt sich der Vorteil, dass auch Sinterteile aus Materialien mit einer vergleichsweise geringen Bruchdehnung mittels des beschriebenen Verfahrens noch mit einer Welle gefügt werden können.

Eine weitere Ausbildung des Verfahrens sieht beispielsweise vor, dass eine Mantelfläche der Welle wenigstens eine Rändelung und/oder Kontur mit Aufmaß zu der Mantelfläche der Welle aufweist und/oder eine Innenfläche der Bohrung wenigstens eine Rändelung und/oder Kontur mit Aufmaß zur Innenfläche der Bohrung aufweist. Weiterhin ist vorgesehen, dass die Rändelung und/oder Kontur eine radiale Verdichtung von Material des Sinterteils bewirkt.

Eine Rändelung mit Aufmaß bezeichnet hierbei eine wallartige Erhebung, welche auf der Mantelfläche der Welle und/oder der Innenfläche der Bohrung eingebracht ist. Es kann sich hierbei um eine linienartige und in einer axialen oder in eine andere Richtung verlaufende Erhebung handeln. Ebenso kann es sich um eine einem beliebigen Verlauf folgende Erhebung handeln. Beispielsweise kann vorgesehen sein, dass die Rändelung einem Zickzackverlauf oder einem wellenartigen Verlauf folgt.

Weiterhin kann beispielsweise vorgesehen sein, dass die Rändelung bereits mittels Urformverfahrens in dem Sinterteil und/oder der Welle eingebracht ist. Ebenso kann vorgesehen sein, dass die Rändelung erst nach Herstellung des Sinterteils und/oder der Welle angebracht ist. Gleichfalls kann vorgesehen sein, dass die Rändelung nach dem Sintern, nach einer gegebenenfalls durchgeführten Wärmebehandlung oder zu einem sonstigen Zeitpunkt an dem Sinterteil angebracht ist. Ebenso kann vorgesehen sein, dass erst nach einem Gießen, nach einem Schmieden und/oder nach einem anderen Verarbeitungsschritt zur Herstellung der Welle die Rändelung an der Welle angebracht ist. Ebenfalls kann vorgesehen sein, dass die Rändelung an der Welle angebracht wird, indem eine Welle mit bereits vorhandenem Aufmaß zu der in dem zum Fügen mit der Welle vorgesehenen Sinterteil vorhandenen Bohrung lediglich in den Bereichen der Oberfläche der Welle abgetragen wird, in denen keine Rändelung vorgesehen ist, so dass in anderen Bereichen lediglich noch die Rändelung stehen bleibt.

Eine Kontur mit Aufmaß der Mantelflächen der Welle beziehungsweise mit Aufmaß zur Fläche der Bohrung bezeichnet eine Erhebung, welche nicht wallartig ist, sondern andersartig gemustert ist. Beispielsweise können hügelartige Erhebungen oder ähnliche Erhebungen hiermit bezeichnet sein. Die Erhebungen können hierbei einer regelmäßigen geometrischen Figur, beispielsweise zylindrisch oder als Pyramiden, sowie in regelmäßiger oder unregelmäßiger Anordnung ausgebildet sein.

Insbesondere kann vorgesehen sein, dass eine Verdichtung von Material des Sinterteils beim Einbringen der Welle in die Bohrung und/oder während der Kalibrierung bewirkt wird. Eine Verdichtung von Material des Sinterteils beim Einbringen der Welle in die Bohrung wird insbesondere in einem Bereich der Rändelung und/oder der Kontur erreicht. Durch das Aufmaß der Rändelung und/oder das Aufmaß der Kontur wird bei Einbringen der Welle in die Bohrung und/oder während des Kalibrierung bewirkt, dass beispielsweise durch plastische Umformungsprozesse im Bereich der Rändelung und/oder Kontur eine Formschlussverbindung bewirkt wird. Vorteil einer Formschlussverbindung ist, dass sie zusätzlich zu einer kraftschlüssigen Verbindung wirkt, wodurch die Verbindung zwischen Sinterteil und Welle verbessert wird, uns somit das Sinterteil beispielsweise höheren Drehmomenten standhalten kann.

In einer weiteren Ausbildung des Verfahrens kann vorgesehen sein, dass eine Mantelfläche der Welle wenigstens eine Rändelung und/oder Kontur mit Untermaß zu der Mantelfläche der Welle aufweist und/oder eine Innenfläche der Bohrung wenigstens eine Rändelung und/oder Kontur mit Untermaß zur Innenfläche der Bohrung aufweist und dass die Rändelung und/oder Kontur mit Material des Sinterteils gefüllt werden und hierdurch einen Formschluss bewirken.

Ebenso kann vorgesehen sein, dass eine Rändelung und/oder Kontur mit Untermaß zur Mantelfläche der Welle an der Mantelfläche der Welle angeordnet ist. Hierdurch wird bewirkt, dass mittels plastischer Verformungsprozesse bei Wirken äußeren Drucks, insbesondere während des Kalibrierens, Material des Sinterteils in die Rändelung und/oder Kontur eingebracht wird. Hierdurch wird in der Folge ein Formschluss bewirkt, so dass die Verbindung zwischen dem Sinterteil und der Welle verbessert wird.

Ebenso kann vorgesehen sein, dass eine Rändelung und/oder Kontur mit Untermaß zur Innenfläche der Bohrung an der Innenfläche der Bohrung angeordnet.

In einer weiteren Ausführungsform des Verfahrens ist weiterhin vorgesehen, dass das Sinterteil wenigstens teilweise aus einer aushärtbaren Legierung besteht. Des Weiteren ist in dieser Ausbildung des Verfahrens vorgesehen, dass nach einem Herstellen des Sinterteils, insbesondere durch Sintern, das Kalibrieren vor einem Aushärten des Sinterteils erfolgt.

Ein Vorteil einer Nutzung des Verfahrens mit einer aushärtbaren Legierung oder mit mehreren aushärtbaren Legierungen ist, dass das Sinterteil eine hohe Festigkeit aufweist. Insbesondere besteht in vielen Fällen ein Vorteil der aushärtbaren Legierungen darin, dass eine zufriedenstellende Festigkeit und/oder Härte mit einer vergleichsweise hohen Duktilität verbunden ist, was bei als Rotor verwendeten Bauteilen häufig vorteilhaft ist, nicht zuletzt, da mit dieser Eigenschaftskombination häufig auch eine vergleichsweise hohe Wechselfestigkeit und/oder Schwingfestigkeit verbunden ist.

Ein weiterer Vorteil einer Nutzung eines Sinterteils aus einer aushärtbaren Legierung ist, dass das Fügen in einem Zustand erfolgen kann, in welchem das Material des Sinterteils noch nicht ausgehärtet und hierdurch deutlich weicher als im ausgehärteten Zustand ist. Beispielsweise können Legierungen verwendet werden, welche eine Festigkeitssteigerung durch die Ausscheidung von Teilchen infolge einer geeigneten Wärmebehandlung ermöglichen. Insbesondere können hier binäre oder pseudobinäre Legierungen zur Verwendung vorgesehen sein, welche eine beschränkte Mischkristallbildung der beiden Komponenten unter Ausbildung von intermetallischen Phasen aufweisen und welche in ihrem Phasendiagramm einen Bereich aufweisen, innerhalb dessen mit abnehmender Temperatur eine sinkende Löslichkeit der gelösten Komponente vorhanden ist. Klassische Beispiele für solche Legierungen sind beispielsweise Aluminiumlegierungen, Bronzelegierungen, Messinglegierungen und Kupferlegierungen.

Des Weiteren kann vorgesehen sein, dass das Sinterteil aus einem heterogenen Gefüge aus zwei oder mehr Legierungen besteht. Des Weiteren kann das Sinterteil aus anderen als binären oder pseudobinären Legierungen bestehen, beispielsweise aus ternären, quaternären oder Legierungen mit noch mehr Bestandteilen. Auch Zusätze aufweisende Legierungen können vorgesehen sein.

Des Weiteren kann vorgesehen sein, dass das Sinterteil ausschließlich aushärtbare oder neben aushärtbaren Legierungen auch Gusslegierungen aufweist. Aber auch sonstige Legierungen oder aber auch reine Metalle können in dem Sinterteil enthalten sein.

In einer anderen Ausbildung des Verfahrens kann vorgesehen sein, dass nach einem Herstellen des Sinterteils, insbesondere durch Sintern, ein Lösungsglühen und/oder ein Abschrecken wenigstens des Sinterteils durchgeführt wird. Weiterhin ist in dieser Ausbildung des Verfahrens vorgesehen, dass das Kalibrieren des Sinterteils vor einem Aushärten des Sinterteils erfolgt.

Ein solches Verfahren kann beispielsweise dann durchgeführt werden, wenn das Sinterteil eine aushärtbare Legierung aufweist. Hierbei kann beispielsweise vorgesehen sein, dass nach einem Sintern des Sinterteils ein Lösungsglühen vorgenommen wird. Dieses Lösungsglühen sorgt für eine Mischkristallbildung einer bei Raumtemperatur nicht durch das entsprechende Gleichgewichtsphasendiagramm vorhergesagten Phase. Des Weiteren kann vorgesehen sein, dass im Anschluss an das Lösungsglühen ein Abschrecken, also ein schroffes Abkühlen, des Sinterteils durchgeführt wird. Das Abschrecken kann beispielsweise durch Eintauchen des Sinterteils in Wasser, Öl oder flüssigen Kunststoff erfolgen. Durch das Abschrecken wird bewirkt, dass das Sinterteil nicht seine Gleichgewichtsphase einnehmen kann, sondern dass die während des Lösungsglühens weitgehend eingenommene, Mischkristalle aufweisende, Phase oder Phasen metastabil vorhanden bleiben. Nach einer gewissen Zeit erfolgt ein Aushärten der aushärtbaren Legierung.

Das Aushärten der aushärtbaren Legierung kann hierbei bei Raumtemperatur oder aber bei höheren Temperaturen als Raumtemperatur erfolgen, wobei unterhalb einer Höchsttemperatur, oberhalb welcher das Aushärten nicht mehr möglich ist, bei umso geringeren Temperaturen eine umso längere Zeitdauer bis zum Aushärten benötigt wird. Bei diesem Prozess des Aushärtens handelt es sich um das sogenannte Auslagern.

Es kann des Weiteren beispielsweise vorgesehen sein, dass das Kalibrierung bei einer Temperatur stattfindet, welche für das Aushärten des Sinterteils geeignet ist, wie beispielsweise der so genannten Auslagertemperatur. Hierfür kann vorgesehen sein, dass die Kalibriermatrize aufgewärmt wird.

Des Weiteren kann vorgesehen sein, dass eine Kalibrierung bei Raumtemperatur stattfindet. Ebenfalls kann vorgesehen sein, dass die Kalibriermatrize gekühlt wird.

Des Weiteren kann vorgesehen sein, dass anstelle eines Lösungsglühens oder zusätzlich zu einem nachfolgenden Lösungsglühen ein Abschrecken bereits unmittelbar nach dem Sintern erfolgt, da nach dem Sintern des Sinterteils dieses eine hohe Temperatur aufweist. In Fällen, in denen die Temperatur des Sinterteils nach dem Sintern einer zum Lösungsglühen geeigneten Temperatur entspricht, kann anstelle des Lösungsglühens unmittelbar nach dem Sintern und einer gegebenenfalls noch nach dem Sintern notwendigen Wartezeit zur Abkühlung des Sinterteils auf die zum Lösungsglühen geeigneten Temperatur ein Abschrecken erfolgen.

Nach dem Abschrecken kann dann die Kalibrierung erfolgen, bevor das Aushärten des Sinterteils erfolgt.

In einer weiteren Ausgestaltung des Verfahrens kann beispielsweise vorgesehen sein, dass das Sinterteil und/oder die Welle zumindest teilweise aus einer Aluminiumlegierung, einer Bronzelegierung, einer Messinglegierung und/oder einem Stahl besteht.

Beispielsweise kann vorgesehen sein, dass das Sinterteil eine naturharte Al-Legierung vom Typ AlMn, AlMg und/oder vom Typ AlMgMn aufweist. Des Weiteren kann vorgesehen sein, dass das Sinterteil eine aushärtbare Legierung vom Typ AlCuMg, AlCuSiMn, AlMgSi, AlZnMg und/oder vom Typ AlZnMgCu. Desweiteren kann beispielsweise vorgesehen sein, dass das Sinterteil eine Al-Gusslegierung des Typs AlSi, AlSiMg, AlSiCu, AlMg, AlMgSi, AlCuTi und oder des Typs AlCuTiMg aufweist.

Insbesondere kann vorgesehen sein, dass das Sinterteil den Werkstoff Al-4.4Cu-0.7Si-0.5Mg aufweist.

Insbesondere kann vorgesehen sein, dass das Sinterteil den Werkstoff Al-14Si-2.5Cu-0.5Mg aufweist.

Insbesondere kann vorgesehen sein, dass das Sinterteil den Werkstoff Al-5.5Zn-2.5Mg-1.5Cu aufweist.

Insbesondere kann vorgesehen sein, dass das Sinterteil den Werkstoff Al-x Cu-y Mg-z Keramik, sogenanntes Al-MMC, aufweist. Hierbei sind x, y sowie z Prozentanteile mit x > y > z.

Des Weiteren kann vorgesehen sein, dass das Sinterteil eine Cu-Legierung, wie insbesondere eine Bronze- oder eine Messinglegierung aufweist.

Ebenso kann vorgesehen sein, dass die Welle einen oder mehrere dieser genannten Werkstoffe umfasst.

Ein wesentlicher Vorteil der beschriebenen Verfahren ist, dass das Verfahren benutzt werden kann, um eine Verbindung zwischen dem als Rotor ausgebildeten Sinterteil und einer Welle auch in Fällen zu ermöglichen, in denen die Bruchdehnung des als Rotor ausgebildeten Sinterteils vergleichsweise gering ist.

Ein weiterer wesentlicher Vorteil der beschriebenen Verfahren ist, dass das Verfahren prinzipiell genutzt werden kann, um ein Fügen von als Rotor ausgebildeten Sinterteilen und Wellen für prinzipiell beliebige Kombinationen von Werkstoffen des Sinterteils und der Welle zu ermöglichen.

In einer weiteren Ausbildung des Verfahrens umfassen das Sinterteil und die Welle den gleichen Werkstoff. Eine weitere Ausbildung des Verfahrens sieht vor, dass das Sinterteil und die Welle im wesentlichen aus dem gleichen Werkstoff bestehen. Eine weitere Ausbildung des Verfahrens sieht vor, dass für die Herstellung des Sinterteils und die Herstellung der Welle derselbe Werkstoff verwendet wird.

Eine weitere Ausbildung des Verfahrens sieht beispielsweise vor, dass das Sinterteil und die Welle bei Raumtemperatur und/oder bei der Sintertemperatur und/oder bei der halben in Kelvin ausgedrückten Sintertemperatur einen gleichen Volumenausdehnungskoeffizienten der Volumenausdehnung pro Grad aufweisen. In einer weiteren Ausgestaltung ist vorgesehen, dass das Sinterteil bei Raumtemperatur und/oder bei der Sintertemperatur und/oder bei der halben in Kelvin ausgedrückten Sintertemperatur eine geringere Volumenausdehnung pro Grad Kelvin aufweist als die Welle.
Ein wesentlicher Vorteil des beschriebenen Verfahrens ist, dass durch das Kalibrierung des Sinterteils wenigstens zeitweise mit in der Bohrung des Sinterteils befindlicher Welle und durch die in der Folge weitgehend vermiedene Entstehung von Zugeigenspannungen ein Fügen von Bauteilen aus Materialien mit vergleichbaren und/oder identischen Wärmeausdehnungskoeffizienten ermöglicht ist. Die ist durch das beschriebene Verfahren auch in solchen Fällen gegeben, in denen mittels konventioneller Methoden des Fügens in einem erwärmten Zustand mit anschließendem Abkühlen das Herstellen einer Presspassverbindung aufgrund zu großer Unterschiede in den Wärmeausdehnungskoeffizienten bei gleichzeitig zu geringer Bruchdehnung eines ein erstes Bauteil umfassenden zweiten Bauteils nicht mehr möglich ist.
So ist es insbesondere möglich, dass beispielsweise eine Kombination eines Motors aus einer Aluminiumlegierung mit einer Welle aus einer Aluminiumlegierung realisierbar ist.

Ein weiterer Gedanke der Erfindung sieht die Verwendung eines Verfahrens der oben erläuterten Verfahren zum Fügen wenigstens eines Sinterteils mit einer Welle zu einem Verbundbauteil vor. Bevorzugt handelt es sich bei dem Sinterteil hierbei um einen Rotor oder einen Nocken.

Es zeigen:
- Fig. 1: ein Ablaufdiagramm einer beispielhaften Ausgestaltung eines Verfahrens zur Herstellung eines Verbundbauteils,
- Fig. 2: einen Zwischenschritt einer anderen beispielhaften Ausgestaltung eines Verfahrens zur Herstellung eines Verbundbauteils,
- Fig. 3: eine beispielhafte Ausgestaltung eines Verbundbauteils sowie
- Fig. 4: eine andere beispielhafte Ausgestaltung eines Verbundbauteils.

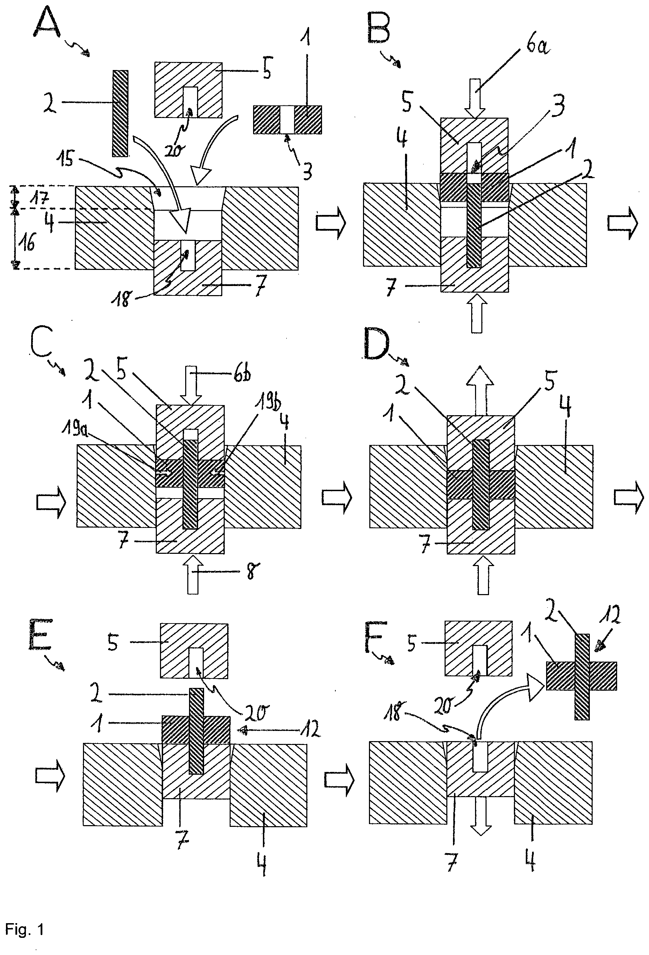

Fig. 1 ist eine Ausgestaltung eines Verfahrens zur Herstellung eines Verbundbauteils 12 zu entnehmen, wie es beispielhaft durchgeführt werden kann. Der Teilfigur A ist eine Kalibriermatrize 4 in einem Querschnitt zu entnehmen. Die Kalibriermatrize 4 weist eine Ausnehmung 15 auf, deren radialen Abmessungen in einem unteren Bereich 16 den endgültigen beabsichtigten Außenabmessungen bis zu dem Außenumfang des Sinterteils 1 entsprechen. In einem oberen Bereich 17 der Ausnehmung 15 weist die Kalibriermatrize eine Einlaufschräge auf. In einem unteren Bereich der Ausnehmung 15 ist ein Unterstempel 7 befindlich, der eine Aufnahmeausnehmung 18 aufweist, die in der gezeigten Ausgestaltung als kreiszylindrische Ausnehmung ausgebildet ist. Die kreiszylindrische Ausnehmung weist hierbei einen identischen Durchmesser wie die Welle 2 auf und ist somit geeignet, die Welle 2 zur radialen Positionierung aufzunehmen. Die in dem axialen Bereich 17 der Kalibriermatrize 4 befindliche Einlaufschräge ist dadurch gekennzeichnet, dass sie konisch zu den Abmessungen der Ausnehmung 15 der Kalibriermatrize 4 in deren endgültigen Außenumfang des Sinterteils 1 aufweisenden Bereich 16 zuläuft, und hierbei von einer Öffnung in einer Oberfläche der Kalibriermatrize 4 ausgeht, deren Abmessungen größer sind als die beabsichtigten endgültigen Abmessungen des Sinterteils 1. In einem ersten Schritt wird nun die Welle 2 in die kreiszylindrische Ausnehmung 18 eingesetzt. In einem zweiten Schritt wird das Sinterteil 1 mit seiner Bohrung 3 die Welle 2 umfassend in die Kalibriermatrize 4 positioniert. Es erfolgt also ein Einbringen der Welle 2 in die durchgehende Bohrung 3 des Sinterteils 1. Das Positionieren des Sinterteils 1 erfolgt derart, dass ein Einlegen des Sinterteils in einen axialen Bereich 17 erfolgt, welcher der Bereich der Einlaufschräge ist.

Der Teilfigur B ist zu entnehmen, dass das Sinterteil 1 in die Einlaufschräge der Kalibriermatrize 4 eingelegt ist und hierbei die Welle 2 teilweise in die Bohrung 3 des Sinterteils 1 eingebracht ist. Die Einlaufschräge ist für das Aufnehmen des Sinterteils 1 ausgebildet, indem sie an ihrer in einem Bereich der Oberfläche befindlichen Seite einen Durchmesser aufweist, welcher größer als die Abmessung des Sinterteils 1 ist. In einem Bereich 16 unterhalb der Einlaufschräge sind die radialen Ausdehnungen der Ausnehmung 15 der Kalibriermatrize 4 geringer als die radiale Ausdehnung des Sinterteils 1 vor dem Kalibrieren. Es erfolgt schließlich ein axiales Einpressen des Sinterteils 1 in die Kalibriermatrize 4. Für das Einpressen des Sinterteils 1 in die Kalibriermatrize 4 wird mittels eines Oberstempels 5 auf eine Oberseite des Sinterteils wirkender axialer Druck erzeugt, was durch den Pfeil 6a gekennzeichnet ist.

Der Teilfigur C ist zu entnehmen, wie mittels der Ausübung axialen Drucks auf eine Oberseite des Sinterteils 1 ein Einpressen des Sinterteils 1 in die Kalibriermatrize 4 erfolgt. Aufgrund der entlang des in die Einpressrichtung der Einlaufschräge bei fortwährendem Einpressen entlang der Achse der Welle 2 geringer werdenden Ausdehnung der Ausnehmung 15 der Kalibriermatrize 4 wird ein radialer Druck über den Außenumfang des Sinterteils in das Innere des Sinterteils, also in Richtung auf die Welle, bewirkt. Der radiale Druck wird hierbei durch die Pfeile 19a und 19 b gekennzeichnet. Der Oberstempel 5 weist hierbei ebenfalls eine zylindrische Ausnehmung 20 auf, welche einen identischen Querschnitt aufweist wie die Welle 2. Hierdurch ist eine Aufnahme der Welle 2 durch die zylindrische Ausnehmung 20 möglich, welche beim Einpressen des Sinterteils 1 mittels des Oberstempels 5 erfolgt.

Wie der Teilfigur D zu entnehmen, bewirkt der ausgeübte allseitige Druck, in axialer Richtung auf eine Oberseite und eine Unterseite jeweils in die Richtung des Inneren des Sinterteils entsprechend der in Teilfigur C erkennbaren Pfeile 6b und 6 sowie auf den Außenumfang des Sinterteils 1 in das Innere des Sinterteils 1 entsprechend der in Teilfigur C erkennbaren Pfeile 19 a und 19b ausgeübte Druck, dass der Außenumfang der Kalibriermatrize 4 die durch eine Innenfläche der Ausnehmung 15 der Kalibriermatrize 4 in dem Bereich 16 gegebenen Abmessungen einnimmt, also das Ziel des Kalibrierens erreicht ist. Während des Kalibrierens fungiert die Welle 2 als Kalibrierdorn, wie der Teilfigur D besonders deutlich zu entnehmen ist.

Wie der Teilfigur E zu entnehmen, erfolgt nach dem Kalibrieren ein Ausstoßen des Sinterteils 1 mit der mit dem Sinterteil 1 gefügten Welle 2 als Verbundbauteil 12.

Der Teilfigur F ist schließlich zu entnehmen, dass als letzter Schritt das Entnehmen des Sinterteils 1 aus der Kalibriermatrize 4 erfolgt. Das Sinterteil 1 und die Welle 2 liegen nunmehr als Verbundbauteil vor.

Eine spezielle Ausbildung des Verfahrens sieht beispielsweise vor, dass bei einem Sinterteil aus einer Aluminiumlegierung Al-4.4Cu-0.7Si-0.5Mg, einer Legierung Al-14Si-2.5Cu-0.5Mg, einer Legierung Al-5.5Zn-2.5Mg-1.5Cu oder einer Legierung Al-x Cu-y Mg-z Keramik bei einer Temperatur in einem Temperaturbereich zwischen 550 °C und 620 °C erfolgt. Bevorzugt erfolgt das Sintern für einen Zeitraum von etwa 30 min - 60 min. In dieser speziellen Ausbildung erfolgt das Kalibrieren bevorzugt in einem Zeitraum von 10 Stunden, bevorzugt in einem Zeitraum von 5 Stunden, bevor nach etwa 10 Stunden bei Raumtemperatur ein weitgehendes Aushärten des Sinterteils erfolgt ist.

Sofern ein Kalibrieren innerhalb dieses Zeitraums nicht erfolgt ist, ist beispielsweise vorgesehen, vor dem Kalibrieren ein Lösungsglühen bei 500 °C vorzunehmen, ein Abschrecken in Wasser vorzunehmen und das Kalibrieren entsprechend dem im vorigen Abschnitt beschriebenen Zeitraum vorzunehmen.

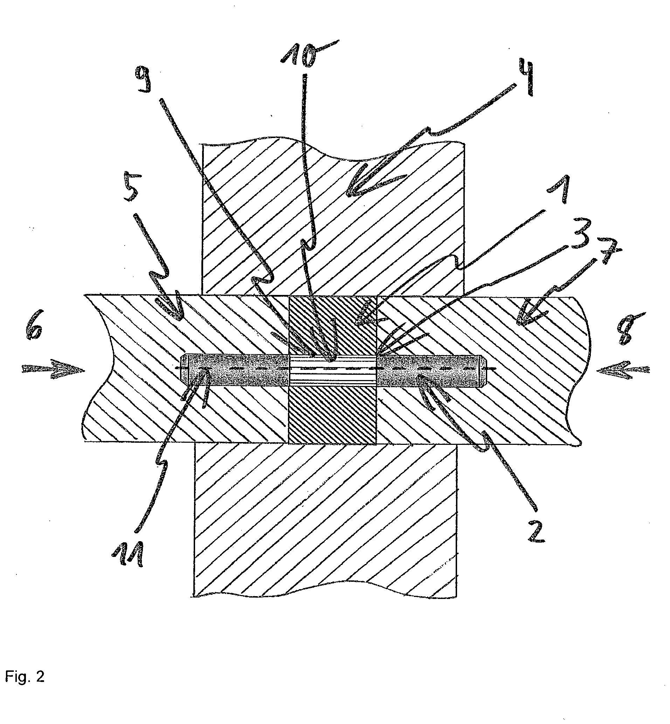

In Fig. 2 ist ein Teilschritt der Kalibriermatrize mit Welle und Sinterbauteil in einem Verfahrensschritt gezeigt, welcher dem in der Fig. 1 gezeigten Teilfigur D erkennbaren Verfahrensschritt entspricht. Im Unterschied zu der in Teilfigur D der Fig. 1 gezeigten Abbildung ist Fig. 2 zu entnehmen, dass die Welle 2 eine Rändelung 10 mit einem Aufmaß aufweist. Die Rändelung 10 ist hierbei auf der Mantelfläche 9 der Welle 2 aufgebracht, und zwar in einem Bereich der Welle 2, der sich während des Fügens der Welle 2 mit dem Sinterteil 1 innerhalb der Bohrung 3 des Sinterteils 1 befindet. Hierdurch wird bewirkt, dass während des zeitweise mit in der Bohrung 3 des Sinterteils 1 befindlicher Welle 2 vorgenommenen Kalibrierens in dem Bereich der einzelnen Linien der Rändelung 10 eine Verdichtung des Materials des Sinterteils 1 vorgenommen wird.

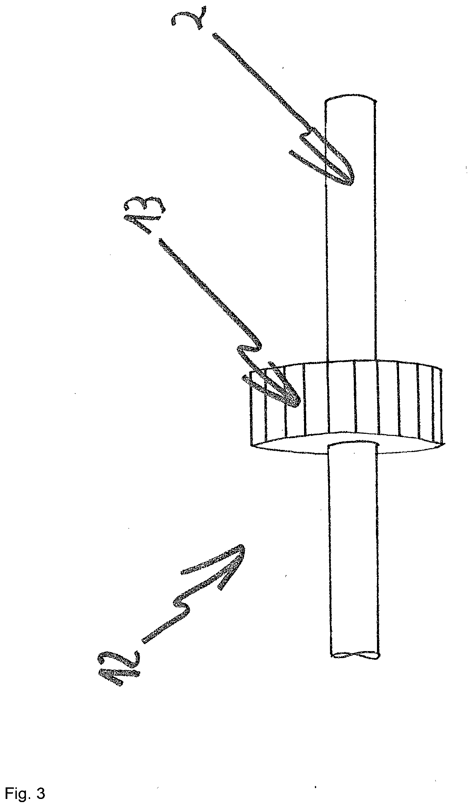

Fig. 3 ist eine Ausgestaltung des Verbundbauteils 12 zu entnehmen, wobei das Verbundbauteil 12 in der gezeigten Ausgestaltung als Zahnrad ausgebildet ist. Das Zahnrad ist hierbei an einer stabförmig geformten Welle 2 angeordnet.

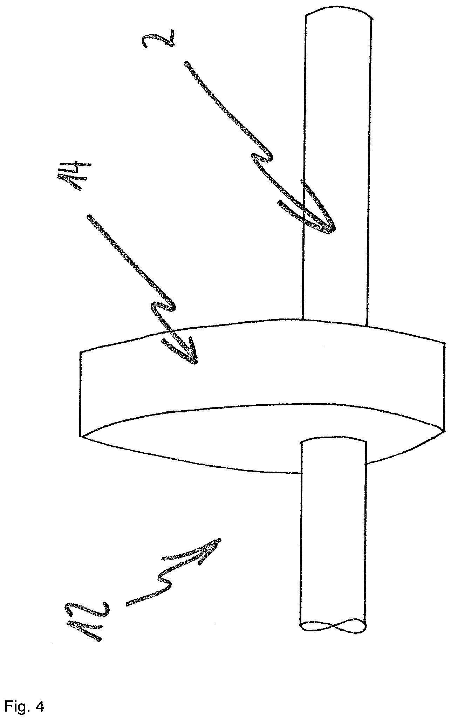

Fig. 4 ist eine ähnliche Ausgestaltung des Verbundbauteils 12 wie der in Fig. 3 gezeigten Ausgestaltung zu entnehmen. Der in Fig. 4 gezeigten Ausgestaltung des Verbundbauteils 12 ist im Gegensatz zu der in Fig. 3 gezeigten Ausgestaltung zu entnehmen, dass das Sinterteil 1 als ein Nocken ausgebildet ist.

## Patentansprüche

1. Verfahren zur Herstellung eines Verbundbauteils (12), wobei wenigstens eine Welle (2) und wenigstens ein, bevorzugt als Rotor oder Nocken ausgebildetes, Sinterteil (1), aufweisend wenigstens einen Außenumfang, zu dem Verbundbauteil (12) gefügt werden,
**dadurch gekennzeichnet,**
**dass** zum Fügen des Verbundbauteils (12) zumindest die folgenden Schritte erfolgen:
- Einbringen der Welle (2) in eine durchgehende Bohrung (3) des Sinterteils (1),
- Kalibrieren des Sinterteils (1) wenigstens mittels einer Kalibriermatrize (4), bevorzugt weiterhin bei gleichzeitiger axialer Druckausübung auf das Sinterteil (1) mittels zumindest eines Oberstempels (5) und zumindest eines Unterstempels (7), wobei **sich die Welle (2)** wenigstens zeitweise während des Kalibrierens in der Bohrung (3) des Sinterteils (1) **befindet, und hierbei das Sinterteil (1) mit der Welle (2) zu dem Verbundbauteil (12) gefügt wird.**

2. Verfahren nach Anspruch 1, wobei
- die Welle (2) zumindest teilweise in die Kalibriermatrize (4) positioniert wird, bevorzugt eine radiale Positionierung der Welle (2) durch ein Positionieren der Welle (2) mittels Anordnens der Welle (2) an einem Unterstempel (4) erfolgt,
- hiernach das Einbringen der Welle (2) in die durchgehende Bohrung (3) mittels Führen des Sinterteils in die Kalibriermatrize (4) bei in der Kalibriermatrize (4) positionierter Welle (2) erfolgt,
- wenigstens teilweise während und/oder teilweise nach dem Einbringen der Welle (2) in die durchgehende Bohrung (3) das Sinterteil (1) in der Kalibriermatrize (4) kalibriert und hierbei mit der Welle (2) zu dem Verbundbauteil (12) gefügt wird.

3. Verfahren nach Anspruch 1, wobei
- das Einbringen der Welle (2) in die durchgehende Bohrung (3) außerhalb der Kalibriermatrize (4) erfolgt, hiernach das Sinterteil (1) mit der in der Bohrung (3) befindlichen Welle (2) in die Kalibriermatrize (4) positioniert wird, und wenigstens teilweise während und/oder teilweise nach dem Einbringen der Welle (2) in die durchgehende Bohrung das Sinterteil (1) in der Kalibriermatrize (4) kalibriert und hierbei mit der Welle zu dem Verbundbauteil (12) gefügt wird,
oder
- das Sinterteil (1) zumindest teilweise, bevorzugt in einem Bereich (15) einer Einlaufschräge der Kalibriermatrize (4), in die Kalibriermatrize (4) positioniert wird, hiernach die Welle (2) in die durchgehende Bohrung (3) eingebracht wird, und wenigstens teilweise während und/oder teilweise nach dem Einbringen der Welle (2) in die durchgehende Bohrung (3) das Sinterteil (1) in der Kalibriermatrize (4) kalibriert und hierbei mit der Welle (2) zu dem Verbundbauteil (12) gefügt wird.

4. Verfahren nach einem der vorhergehenden Ansprüche, **dadurch gekennzeichnet, dass** vor dem Einbringen der Welle (2) in die Bohrung (3) die Welle (2) gegenüber der Bohrung (3) kein Übermaß aufweist.

5. Verfahren nach einem der vorhergehenden Ansprüche, **dadurch gekennzeichnet, dass** nach dem Einbringen der Welle (2) in die Bohrung (3) des Sinterteils (1) das Sinterteil (1) mit in der Bohrung (3) befindlicher Welle (2) in die Kalibriermatrize (4) eingepresst wird.

6. Verfahren nach einem der vorhergehenden Ansprüche, **dadurch gekennzeichnet, dass** das Sinterteil (1) axial in die Kalibriermatrize (4) eingepresst wird.

7. Verfahren nach einem der vorhergehenden Ansprüche, **dadurch gekennzeichnet, dass** das Sinterteil (1) wenigstens teilweise während des Kalibrierens zusätzlich zu von der Kalibriermatrize (4) aufgebrachtem konzentrischen Druck axial gepresst wird, und zwar durch eine Oberseite des Sinterteils (1) einwirkenden Druck (6) und/oder durch auf eine Unterseite des Sinterteils (1) einwirkenden Druck (8).

8. Verfahren nach einem der vorhergehenden Ansprüche, **dadurch gekennzeichnet, dass** durch das Kalibrieren des Sinterteils (1) mit wenigstens zeitweise gleichzeitig während des Kalibrierens in der Bohrung (3) des Sinterteils (1) befindlicher Welle (2) bewirkt wird, dass in einem selben Arbeitsgang
- eine kraftschlüssige Verbindung zwischen dem Sinterteil (1) und der Welle (2) hergestellt wird und
- der Außenumfang des Sinterteils (1) mittels Radialverdichtung kalibriert wird.

9. Verfahren nach einem der vorhergehenden Ansprüche, **dadurch gekennzeichnet, dass** mittels durch das Kalibrieren des Sinterteils (1) erzeugten Drucks, der auf das Sinterteil (1) einwirkt, in Zusammenwirkung mit durch die in der Bohrung (3) des Sinterteils (1) befindlichen Welle (2) erzeugtem Gegendruck innerhalb des Sinterteils (1) im Wesentlichen Druckeigenspannungen erzeugt werden, bevorzugt dass ein Kraftschluss zwischen dem Sinterteil (1) und der Welle (2) im Wesentlichen durch diese Druckeigenspannungen bewirkt wird.

10. Verfahren nach einem der vorhergehenden Ansprüche, **dadurch gekennzeichnet, dass** eine Mantelfläche (9) der Welle (2) wenigstens eine Rändelung und/oder Kontur mit Aufmaß zu der Mantelfläche (9) der Welle (2) aufweist und/oder eine Innenfläche der Bohrung (3) wenigstens eine Rändelung (10) und/oder Kontur mit Aufmaß zur Innenfläche der Bohrung (3) aufweist und dass die Rändelung (10) und/oder Kontur eine radiale Verdichtung von Material des Sinterteils (1), bevorzugt in einem Bereich der Innenfläche der Bohrung (3), bewirkt.

11. Verfahren nach einem der vorhergehenden Ansprüche, **dadurch gekennzeichnet, dass** eine Mantelfläche (9) der Welle (2) wenigstens eine Rändelung und/oder Kontur mit Untermaß zu der Mantelfläche (9) der Welle (2) aufweist und/oder eine Innenfläche der Bohrung (3) wenigstens eine Rändelung (10) und/oder Kontur mit Untermaß zur Innenfläche der Bohrung (3) aufweist, und dass die Rändelung (10) und/oder Kontur mit Material des Sinterteils (1) gefüllt werden und hierdurch einen Formschluss bewirken.

12. Verfahren nach einem der vorhergehenden Ansprüche, **dadurch gekennzeichnet, dass** das Sinterteil (1) wenigstens teilweise aus einer aushärtbaren Legierung besteht und dass nach einem Herstellen des Sinterteils (1) das Kalibrieren vor einem Aushärten des Sinterteils (1) erfolgt.

13. Verfahren nach einem der vorhergehenden Ansprüche, **dadurch gekennzeichnet, dass** nach dem Herstellen des Sinterteils (1) ein Lösungsglühen und/oder ein Abschrecken wenigstens des Sinterteils (1) durchgeführt wird, und dass das Kalibrieren des Sinterteils (1) vor einem Aushärten des Sinterteils (1) erfolgt.

14. Verfahren nach einem der vorhergehenden Ansprüche, **dadurch gekennzeichnet, dass** das Sinterteil (1) und/oder die Welle (2) zumindest teilweise aus einer Aluminiumlegierung, einer Bronzelegierung, einer Messinglegierung und/oder einem Stahl besteht.

15. Verwendung eines Verfahrens nach einem der Ansprüche 1 bis 14 -für ein Fügen wenigstens eines, bevorzugt als Rotor (13) oder als Nocken (14) ausgebildeten, Sinterteils (1) mit einer Welle (2) zu einem Verbundbauteil (12).

## Claims

1. Method for producing a composite component (12), wherein at least one shaft (2) and at least one sintered part (1), preferably in the form of a rotor or a cam, having at least one outer periphery, are joined to form the composite component (12), **characterized in that**
for joining of the composite component (12) at least the following steps are conducted:
- introducing the shaft (2) into a continuous bore (3) of the sintered part (1),
- calibrating the sintered part (1) at least by means of a calibrating die (4), furthermore preferably with the simultaneous application of axial pressure onto the sintered part (1) by means of at least one upper punch (5) and at least one lower punch (7), wherein the shaft (2) is located in the bore (3) of the sintered part (1) at least temporarily during the calibration process, and the sintered part (1) is hereby joined with the shaft (2) to form the composite component (12).

2. Method according to claim 1, wherein
- the shaft (2) is at least partially positioned in the calibrating die (4), preferably a radially positioning of the shaft (2) is conducted by positioning the shaft (2) by arranging the shaft (2) on a lower punch (4),
- then introducing the shaft (2) into the continuous bore (3) by guiding the sintered part into the calibrating die (4) with the shaft (2) positioned in the calibrating die (4),
- at least partially during and/or partially after the introduction of the shaft (2) into the continuous bore (3), the sintered part (1) is calibrated in the calibrating die (4) and is thereby joined with the shaft (2) to form the composite component (12).

3. Method according to claim 1, wherein
- Introducing the shaft (2) into the continuous bore (3) is done outside of the calibrating die (4), then the sintered part (1), with the shaft (2) located in the bore (3) thereof, is positioned in the calibrating die (4), and, at least partially during and/or partially after the introduction of the shaft (2) into the continuous bore (3), the sintered part (1) is calibrated in the calibrating die (4) and is thereby joined with the shaft to form the composite component (12),
or
- the sintered part (1) is positioned in the calibrating die (4) at least partially, preferably in a region (15) of the lead-in bevel, after which the shaft (2) is introduced into the continuous bore (3), and, at least partially during and/or partially after the introduction of the shaft (2) into the continuous bore (3), the sintered part (1) is calibrated in the calibrating die (4) and is thereby joined with the shaft (2) to form the composite component (12).

4. Method according to one of the preceding claims, **characterized in that** the shaft (2) is not oversized relative to the bore (3) before the shaft (2) is introduced into the bore (3).

5. Method according to one of the preceding claims, **characterized in that** after the introduction of the shaft (2) into the bore (3) of the sintered part (1), the sintered part (1) is pressed into the calibrating die (4) with the shaft (2) being located in the bore (3).

6. Method according to one of the preceding claims, **characterized in that** the sintered part (1) is axially pressed into the calibrating die (4).

7. Method according to one of the preceding claims, **characterized in that** the sintered part (1), in addition to the concentric pressure applied by the calibrating die (4), is pressed axially by a pressure (6) acting on a top side of the sintered part (1) and/or by a pressure (8) acting on an underside of the sintered part (1) at least partially during calibration.

8. Method according to one of the preceding claims, **characterized in that** by calibrating the sintered part (1) with the shaft located in the bore (3) of the sintered part (1) at least temporarily during the calibration, it is possible, in one and the same working step
- to establish a non-positive connection between the sintered part (1) and the shaft (2), and
- to calibrate the outer periphery of the sintered part (1) by means of radial compression.

9. Method according to one of the preceding claims, **characterized in that** internal compressive stresses are substantially generated within the sintered part (1) by means of the pressure generated by the calibration of the sintered part (1), which acts on the sintered part (1), in interaction with counter pressure generated by the shaft (2), which is located in the bore (3) of the sintered part (1), preferably **in that** a non-positive connection is established between the sintered part (1) and the shaft (2) substantially by means of these internal compressive stresses.

10. Method according to one of the preceding claims, **characterized in that** a circumferential surface (9) of the shaft (2) has at least one knurl and/or a contour that are oversized relative to the circumferential surface (9) of the shaft (2) and/or an inner surface of the bore (3) has at least one knurl (10) and/or contour that are oversized relative to the inner surface of the bore (3), and that the knurl (10) and/or the contour induce a radial compression of material of the sintered part (1), preferably in a region of the inner surface of the bore (3).

11. Method according to one of the preceding claims, **characterized in that** a circumferential surface (9) of the shaft (2) has at least one knurl and/or a contour that are undersized relative to the circumferential surface (9) of the shaft (2) and/or an inner surface of the bore (3) has at least one knurl (10) and/or contour that are undersized relative to the inner surface of the bore (3), and that the knurl (10) and/or the contour are filled with material of the sintered part (1) and hereby establish a form-fit connection.

12. Method according to one of the preceding claims, **characterized in that** the sintered part (1) is comprised, at least in part, of a curable alloy and that, after production of the sintered part (1), calibration is carried out before the sintered part (1) is cured.

13. Method according to one of the preceding claims, **characterized in that** after production of the sintered part (1), solution annealing and/or quenching at least of the sintered part (1) is carried out and that the sintered part (1) is calibrated before the sintered part (1) is cured.

14. Method according to one of the preceding claims, **characterized in that** the sintered part (1) and/or the shaft (2) are comprised, at least in part, of an aluminum alloy, a bronze alloy, a brass alloy, and/or a steel.

15. Use of a method according to one of the claims 1 to 14 for joining at least one sintered part (1), which is preferably designed as a rotor (13) or a cam (14), to a shaft (2) to form a composite component (12).

## Revendications

1. Procédé de fabrication d'un élément composite (12), dans lequel on assemble en un élément composite (12) au moins un arbre (2) et au moins une pièce frittée (1) réalisée de préférence en forme de rotor ou de came, présentant au moins une périphérie extérieure, **caractérisé en ce que** pour l'assemblage de l'élément composite (12) on effectue au moins les opérations suivantes:
- introduire l'arbre (2) dans un alésage continu (3) de la pièce frittée (1),
- calibrer la pièce frittée (1) au moins au moyen d'une matrice de calibrage (4), de préférence en outre en exerçant en même temps une pression axiale sur la pièce frittée (1) au moyen d'au moins un poinçon supérieur (5) et au moins un poinçon inférieur (7), dans lequel l'arbre (2) se trouve au moins temporairement dans l'alésage (3) de la pièce frittée (1) pendant le calibrage, et l'on assemble ainsi la pièce frittée (1) à l'arbre (2) pour former l'élément composite (12).

2. Procédé selon la revendication 1, dans lequel
- on positionne l'arbre (2) au moins en partie dans la matrice de calibrage (4), de préférence on effectue un positionnement radial de l'arbre (2) en positionnant l'arbre (2) en disposant l'arbre (2) sur un poinçon inférieur (4),
- on procède ensuite à l'introduction de l'arbre (2) dans l'alésage continu (3) par guidage de la pièce frittée dans la matrice de calibrage (4) avec l'arbre (2) positionné dans la matrice de calibrage (4),
- on calibre la pièce frittée (1) dans la matrice de calibrage (4) au moins en partie pendant et/ou en partie après l'introduction de l'arbre (2) dans l'alésage continu (3) et on l'assemble ainsi à l'arbre (2) pour former l'élément composite (12).

3. Procédé selon la revendication 1, dans lequel
- on procède à l'introduction de l'arbre (2) dans l'alésage continu (3) à l'extérieur de la matrice de calibrage (4), on positionne ensuite la pièce frittée (1) dans la matrice de calibrage (4) avec l'arbre (2) se trouvant dans l'alésage (3), et on calibre la pièce frittée (1) dans la matrice de calibrage (4) au moins en partie pendant et/ou en partie après l'introduction de l'arbre (2) dans l'alésage continu (3) et on l'assemble ainsi à l'arbre pour former l'élément composite (12)
ou
- on positionne la pièce frittée (1) au moins en partie dans la matrice de calibrage (4), de préférence dans une région (15) d'une rampe d'entrée de la matrice de calibrage (4), puis on introduit l'arbre (2) dans l'alésage continu (3), et on calibre la pièce frittée (1) dans la matrice de calibrage (4) au moins en partie pendant et/ou en partie après l'introduction de l'arbre (2) dans l'alésage continu (3) et on l'assemble ainsi à l'arbre (2) pour former l'élément composite (12).

4. Procédé selon l'une quelconque des revendications précédentes, **caractérisé en ce qu'**avant l'introduction de l'arbre (2) dans l'alésage (3) l'arbre (2) n'est pas surdimensionné par rapport à l'alésage (3).

5. Procédé selon l'une quelconque des revendications précédentes, **caractérisé en ce qu'**après l'introduction de l'arbre (2) dans l'alésage (3) de la pièce frittée (1), on presse la pièce frittée (1) dans la matrice de calibrage (4) avec l'arbre (2) se trouvant dans l'alésage (3).

6. Procédé selon l'une quelconque des revendications précédentes, **caractérisé en ce que** l'on presse la pièce frittée (1) axialement dans la matrice de calibrage (4).

7. Procédé selon l'une quelconque des revendications précédentes, **caractérisé en ce que** l'on presse la pièce frittée (1) au moins en partie pendant le calibrage en plus de la pression concentrique appliquée par la matrice de calibrage (4), notamment par une pression (6) agissant sur un côté supérieur de la pièce frittée (1) et/ou par une pression (8) agissant sur un côté inférieur de la pièce frittée (1).

8. Procédé selon l'une quelconque des revendications précédentes, **caractérisé en ce que**, par le calibrage de la pièce frittée (1) avec l'arbre (2) se trouvant au moins temporairement en même temps pendant le calibrage dans l'alésage (3) de la pièce frittée (1), on fait en sorte que, dans la même opération
- on crée une liaison par adhérence entre la pièce frittée (1) et l'arbre (2), et
- on calibre la périphérie extérieure de la pièce frittée (1) au moyen d'une compression radiale.

9. Procédé selon l'une quelconque des revendications précédentes, **caractérisé en ce que** l'on produit au moyen de la pression produite par le calibrage de la pièce frittée (1), qui agit sur la pièce frittée (1), en coopération avec la contrepression produite par l'arbre (2) qui se trouve dans l'alésage (3) de la pièce frittée (1), essentiellement des contraintes internes de compression à l'intérieur de la pièce frittée (1), de préférence **en ce que** l'on crée par ces contraintes internes de compression une liaison par adhérence entre la pièce frittée (1) et l'arbre (2).

10. Procédé selon l'une quelconque des revendications précédentes, **caractérisé en ce qu'**une face latérale (9) de l'arbre (2) présente au moins un moletage et/ou un contour avec des surélévations par rapport à la face latérale (9) de l'arbre (2) et/ou une face intérieure de l'alésage (3) présente au moins un moletage (10) et/ou un contour avec des surélévations par rapport à la face intérieure de l'alésage (3), et **en ce que** le moletage (10) et/ou le contour provoque une compression radiale du matériau de la pièce frittée (1), de préférence dans une région de la face intérieure de l'alésage (3).

11. Procédé selon l'une quelconque des revendications précédentes, **caractérisé en ce qu'**une face latérale (9) de l'arbre (2) présente au moins un moletage et/ou un contour avec des creux par rapport à la face latérale (9) de l'arbre (2) et/ou une face intérieure de l'alésage (3) présente au moins un moletage (10) et/ou un contour avec des creux par rapport à la face intérieure de l'alésage (3), et **en ce que** le moletage (10) et/ou le contour sont remplis avec le matériau de la pièce frittée (1) et forment de ce fait une liaison par emboîtement.

12. Procédé selon l'une quelconque des revendications précédentes, **caractérisé en ce que** la pièce frittée (1) se compose au moins en partie d'un alliage durcissable et **en ce que** l'on effectue le calibrage après une fabrication de la pièce frittée (1) et avant un durcissement de la pièce frittée (1).

13. Procédé selon l'une quelconque des revendications précédentes, **caractérisé en ce qu'**après la fabrication de la pièce frittée (1), on effectue un recuit de mise en solution et/ou une trempe au moins de la pièce frittée (1), et **en ce que** l'on effectue le calibrage de la pièce frittée (1) avant un durcissement de la pièce frittée (1).

14. Procédé selon l'une quelconque des revendications précédentes, **caractérisé en ce que** la pièce frittée (1) et/ou l'arbre (2) se compose(nt) au moins en partie d'un alliage d'aluminium, d'un alliage de bronze, d'un alliage de laiton et/ou d'un acier.

15. Utilisation d'un procédé selon l'une quelconque des revendications 1 à 14 pour un assemblage d'au moins une pièce frittée (1), réalisée de préférence en forme de rotor (13) ou de came (14), avec un arbre (2) pour former un élément composite (12).
